# FASCICULE DE BREVET EUROPEEN

(11) **EP 1 246 499 B1**
(45) Date de publication et mention de la délivrance du brevet: **03.03.2010**
(21) Numéro de dépôt: 02290725.7
(22) Date de dépôt: 21.03.2002
(51) Int. Cl.: H04W 36/14, H04W 48/18

(54) **Procédé pour l'etablissement d'une liste de cellules voisines dans un système de radiocommunications mobiles**
Verfahren zur Erstellung eines Nachbarzellliste in einem mobilen Funkkommunikationssystem
Method for establishing a list of neighboring cells in a mobile radiocommunication system

(30) Priorité: 30.03.2001 FR 0104403
(43) Date de publication de la demande: 02.10.2002
(73) Titulaire: Evolium S.A.S., 75008 Paris (FR)
(72) Inventeur: Blanc, Patrick, 92130 Issy Les Moulineaux (FR); Treillard, Pascal, 91120 Palaiseau (FR)
(74) Mandataire: El Manouni, Josiane

(56) Documents cités:
- EP-A- 0 888 026
- US-A- 5 839 070

## Description

La présente invention concerne d'une manière générale les systèmes de radiocommunications mobiles.

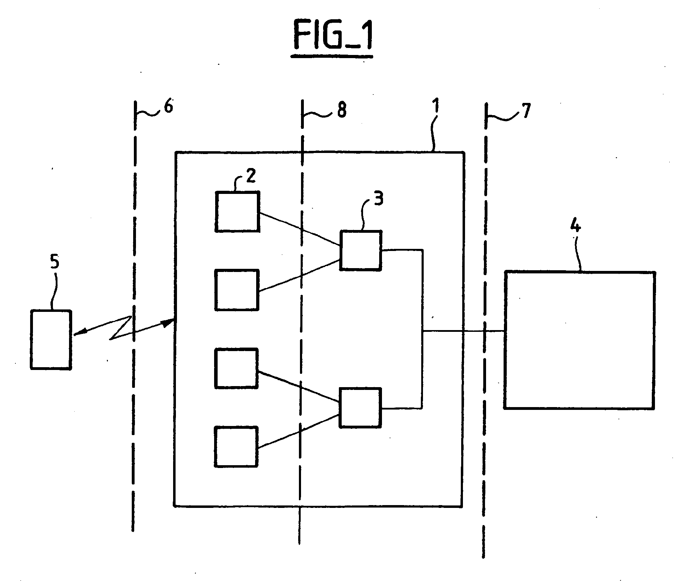

L'architecture de tels systèmes est rappelée sur la figure 1. D'un manière générale un tel système comporte essentiellement :
- un réseau d'accès 1 (ou AN, pour « Access Network » en anglais), formé de stations de base telles que 2 et de contrôleurs de stations de base tels que 3,
- un réseau de coeur 4 (ou CN, pour « Core Network »).

Le réseau d'accès radio 1 est en relation d'une port avec des stations mobiles telles que 5, via une interface 6 appelée aussi interface radio, et d'autre part avec le réseau de coeur via une interface 7. A l'intérieur du réseau d'acccès radio, les stations de base communiquent avec les contrôleurs de stations de base via une interface 8.

Le réseau de coeur 4 est en relation d'une part avec le réseau d'accès radio via l'interface 7, et d'autre part avec des réseaux extérieurs, non illustrés spécifiquement.

D'une manière générale, ces systèmes ont une architecture cellulaire, et des techniques de transfert inter-cellulaire (ou « handover » en anglais) sont prévues pour transférer les communications de cellule à cellule selon les besoins. Une technique classiquement utilisée est la technique de transfert inter-cellulaire assisté par le mobile (ou « MAHO », pour "Mobile Assisted Hand-Over" en anglais), selon laquelle une station mobile effectue des mesures radio sur des cellules voisines de sa cellule serveuse et reporte les résultats de ces mesures radio au réseau, en vue de faciliter la prise de décision de transfert inter-cellulaire par ce dernier.

La liste de cellules voisines sur lesquelles des mesures sont à effectuer est habituellement transmise par le réseau aux stations mobiles, généralement suivant un mode de transmission par diffusion. Cette liste est en général définie dans la partie du réseau qui est en contact avec les stations mobiles par l'intermédiaire de l'interface radio, à savoir le réseau d'accès, ou AN. Ce réseau d'accès est en général configuré avec une telle liste par des moyens d'opération et de maintenance du réseau, ou O&M (ou « Opération & Maintenance » en anglais), qui déterminent eux-mêmes cette liste en fonction de la configuration du système. Une solution de ce type est décrite par exemple dans le document EP-A-0 888 026.

D'une manière générale, de tels systèmes comportent une pluralité de réseaux distincts, ou PLMNs (pour « Public Land Mobile Network » en anglais) dont les zones de couverture peuvent ou non se recouvrir, et qui sont exploités indépendamment les uns des autres par différents opérateurs. Ceci permet notamment d'étendre la couverture géographique et/ou les services proposés.

Pour permettre, si nécessaire, des transferts inter-PLMN, c'est-à-dire des transferts inter-cellulaires entre cellules appartenant à des réseaux différents, la liste de cellules voisines peut alors inclure des cellules appartenant à des réseaux autres que le réseau auquel la station mobile est connectée, appelé aussi dans ce qui suit réseau serveur.

Un transfert inter-PLMN d'un réseau serveur vers un autre réseau ne peut toutefois être effectué que s'il est bien autorisé, ce qui nécessite de connaître certaines informations telles que des informations relatives aux accords d'itinérance entre opérateurs (ou « roaming agreements »), et au type d'abonnement de l'utilisateur. Or ces informations ne sont habituellement pas disponibles dans le réseau d'accès, mais dans la partie du réseau dans laquelle de telles informations sont en général centralisées, ou réseau de coeur (ou CN, pour « Core Network» en anglais). C'est pourquoi la liste de cellules voisines est habituellement établie sans tenir compte de ces informations, et la vérification des droits d'accès n'est effectuée qu'ultérieurement.

Dans ces conditions, une station mobile peut être amenée à effectuer des mesures radio sur une cellule voisine appartenant à un réseau différent de son réseau serveur, alors qu'elle n'est ensuite pas autorisée à y accéder. Ceci ne correspond pas à une utilisation optimale des ressources de signalisation sur l'interface radio et des ressources de traitement dans le réseau, et entraîne donc une dégradation des performances du système.

En outre, dans ces systèmes, les évolutions technologiques conduisent à distinguer des technologies dites de deuxième génération, notamment de type GSM (pour « Global System for Mobile communication »), et des technologies dites de troisième génération, notamment de type UMTS (pour « Universal Mobile Telecommunication System »).

Dans les systèmes de type GSM, le réseau d'accès radio est appelé BSS ("Base Station Subsystem"), les stations de base sont appelées BTS ("Base Transceiver Station"), les contrôleurs de stations de base sont appelés BSC ("Base Station Controller"), et le réseau de coeur est appelé NSS (« Network Sub-System »). Ce dernier contient essentiellement des entités ou noeuds de réseau, telles que MSC (« Mobile Switching Center »). L'interface radio est appelé interface « Um », l'interface 7 est appelée interface « A », et l'interface 8 est appelée interface « Abis ».

D'une manière générale le système GSM fait l'objet de normalisation, et pour plus d'informations, on pourra se reporter aux normes correspondantes publiées par les organismes de normalisation correspondants.

Dans les systèmes de type UMTS, le réseau d'accès radio est appelé UTRAN ("UMTS Terrestrial Radio Access Network »), les stations de base sont appelées « Node B », les contrôleurs de stations de base sont appelés RNC ("Radio Network Controller"), et les stations mobiles sont appelées UE (« User Equipment »). L'interface radio est appelé « interface Uu », l'interface 7 est appelée interface « lu », l'interface 8 est appelée interface « lub », et une interface entre RNCs est en outre introduite, appelée interface « lur ». L'ensemble formé par un RNC et les Node B qu'il contrôle est aussi appelé RNS (« Radio Network Sub-system»).

Le réseau d'accès du système UMTS diffère essentiellement de celui du système GSM par l'introduction de technologies d'accès radio plus performantes, basées notamment sur l'utilisation de technique d'accès multiple de type W-CDMA (« Wideband- Code Division Multiple Access »). On distingue en outre deux modes possibles, un mode appelé FDD (« Frequency Domain Duplex ») et un mode appelé TDD (« Time Domain Duplex »).

D'une manière générale le système UMTS fait également l'objet de normalisation, et pour plus d'informations, on pourra se reporter aux normes correspondantes, publiées par les organismes de normalisation correspondants.

En outre dans un même réseau ou PLMN peuvent coexister des cellules utilisant des technologies d'accès radio de deuxième génération et des cellules utilisant des technolgies d'accès radio de troisième génération. Ceci est notamment le cas lorsque des technologies d'accès radio de troisième génération sont introduites dans une infrastructure existante de deuxième génération. En outre, les services proposés peuvent aussi ne pas être uniformes à l'intérieur d'un même réseau ou PLMN, pour des raisons autres que le type de technolgie d'accès radio disponible.

La notion d'autorisation d'un transfert inter-PLMN devient alors relativement complexe, pour tenir compte de toutes les situations possibles. Par exemple, il peut arriver qu'un réseau ou PLMN soit autorisé en technologie UMTS (parce qu'il y a un accord d'itinérance sur l'UMTS entre les opérateurs considérés), mais que ce réseau ne soit pas autorisé en technologie GSM (parce qu'il n'y a pas d'accord d'itinérance sur le GSM entre ces opérateurs). Les cas où une station mobile risque d'être amenée à effectuer des mesures radio sur une cellule voisine alors qu'elle n'est ensuite pas autorisée à y accéder risquent alors de devenir relativement fréquents, et les performances d'ensemble du système risquent alors d'être d'autant plus dégradées.

En outre, les technologies d'accès radio de troisième génération, de type UMTS, nécessitent l'utilisation d'un mode de transmission particulier appelé mode compressé (ou « compressed mode » en anglais), pour permettre à une station mobile d'effectuer des mesures radio sur une cellule voisine ayant une fréquence différente de celle de sa cellule serveuse.

Le mode compressé peut ainsi être utilisé par exemple dans le cas de cellule serveuse utilisant une technolgie d'accès radio de type UMTS, et dans le cas de cellule voisine utilisant une technologie d'accès radio de type GSM, ou dans le cas de cellule serveuse utilisant le mode FDD et de cellule voisine utilisant le mode TDD ou inversement.

Le mode compressé introduit en lui-même certaines dégradations de performance, car les informations transmises sont alors compressées, c'est-à-dire transmises sur une durée inférieure à celle nécessaire en mode normal, afin de créer des interruptions de transmission (ou « transmission gaps » en anglais) pendant lesquelles la station mobile peut effectuer les mesures radio nécessaires.

Or, comme indiqué précédemment, une station mobile peut devoir effectuer des mesures sur une cellule voisine appartenant à un réseau différent de son réseau serveur, alors qu'elle n'est ensuite pas autorisée à y accéder. Si le mode compressé doit pour cela être utilisé, de telles dégradations de performance sont alors inutilement introduites.

Par ailleurs, les paramètres de mode compressé (tels que notamment la durée et/ou la fréquence des interruptions de transmission) peuvent être différents suivant le type de technolgie d'accès radio utilisé dans la cellule voisine sur laquelle des mesures sont à effectuer. Dans ces conditions, de même que la liste cellules voisines ne peut pas être construite de manière optimale (comme expliqué précédemment) les paramètres de mode compressé ne peuvent pas non plus être configurés de manière optimale.

Pour éviter les divers inconvénients mentionnés dans ce qui précède, il serait possible de dupliquer dans le réseau d'accès les informations nécessaires à la vérification des droits d'accès, prévues par ailleurs dans le coeur de réseau Outre le fait que ceci ne correspond pas à une solution économique, une telle solution n'est pas non plus optimale, car elle accroît de manière significative la charge des moyens d'opération et de maintenance, d'autant que ces informations peuvent devenir relativement complexes, pour les raisons exposées précédemment.

Il est aussi possible que le réseau serveur indique aux stations mobiles, pour chaque cellule de la liste de cellules voisines, l'identité du réseau ou PLMN auquel elle appartient. Sur la base de cette information, et en fonction des données d'abonnment de l'utilisateur (disponibles notamment dans la carte SIM, pour « Subcriber Identity Module » en anglais, associée à la station mobile) a station mobile pourrait alors sélectionner dans cette liste les cellules appartenant à des réseaux auxquels l'utilisateur a accès, et n'effectuer des mesures que sur ces cellules. Cependant une telle solution n'est pas non plus suffisante ou optimale, notamment car le mobile n'a pas connaissance des informations relatives aux accords d'itinérance entre opérateurs. Une solution avant ce type d'inconvénient est décrite par exemple dans le document US-A-5 839 070.

Un besoin existe donc pour une solution permettant d'éviter de tels inconvénients, ou plus généralement pour une solution permettant d'optimiser les transferts inter-cellulaires dans ces systèmes.

La présente invention a ainsi pour objet un procédé pour l'établissement d'une liste de cellules voisines pour une station mobile dans un système ce cellulaire de radiocommunications mobiles, ce procédé étant essentiellement caractérisé en ce que, ledit système comportant une pluralité de réseaux distincts, ladite liste est une liste optimisée, établie dans le réseau d'accès du réseau serveur de cette station mobile, sur la base d'une liste de réseaux autorisés pour cette station mobile, reçue du réseau de coeur de ce réseau serveur.

Suivant une autre caractéristique, dans le cas de réseaux comportant différents types de cellules dans lesquelles sont disponibles différents services ou technologies d'accès radio, ladite liste de réseaux autorisés indique en outre, pour un réseau autorisé, les services ou technologies d'accès radio autorisés.

Suivant une autre caractéristique, les différentes technologies d'accès radio incluent des technologies d'accès radio de deuxième génération et des technolgies d'accès radio de troisième génération.

Suivant une autre caractéristique, les réseaux et/ou services ou technologies d'accès radio autorisés sont fonction des acccords d'itinérance entre opérateurs.

Suivant une autre caractéristique, les réseaux et/ou services ou technologies d'accès radio autorisés sont en outre fonction du type d'abonnement de l'utilisateur.

Suivant une autre caractéristique, les réseaux autorisés sont classés suivant un ordre de préférence pour l'utilisateur.

Suivant une autre caractéristique, ledit réseau d'accès utilise des technologies d'accès radio de deuxième génération.

Suivant une autre caractéristique, dans un système de type GSM, ledit réseau d'accès est du type BSS (« Base Station Sub-system»).

Suivant une autre caractéristique, ledit réseau d'accès utilise des technologies de troisième génération.

Suivant une autre caractéristique, dans un stystème de type UMTS, ledit réseau d'accès est du type RNS (« Radio Network Sub-system»).

Suivant une autre caractérsitique, ladite liste optimisée est transmise à la station mobile dans un canal commun.

Suivant une autre caractérsitique, ladite liste optimisée est transmise à la station mobile dans un canal dédié.

Un autre objet de la présente invention est un équipement de coeur de réseau (CN) pour réseau de radiocommunications mobiles comportant des moyens pour transmettre à un contrôleur de réseau radio (RNC) une liste de réseaux autorisés pour une station mobile (UE).

Un autre objet de la présente invention est un contrôleur de réseau radio (RNC) pour réseau des radiocommunications mobiles comportant des moyens pour recevoir d'un équipement de coeur de réseau (CN) une liste de réseaux autorisés pour une station mobile (UE) et des moyens pour établir une liste de cellules voisines optimisée pour ladite station mobile, sur la base de ladite liste de réseaux autorisés.

D'autres objets et caractéristiques de la présente invention apparaîtront à la lecture de la description suivante d'une exemple de réalisation, faite en relation avec les dessins ci-annexés dans lesquels:
- la figure 1 rappelle l'architecture générale d'un système de radiocommunications mobiles,
- la figure 2 est un schéma destiné à illustrer un exemple de procédé suivant l'invention.

Un des buts de la présente invention est donc d'optimiser les transferts inter-cellulaires assistés par le mobile dans un système cellulaire de radiocommunications mobiles, dans un réseau comportant une pluralité de réseaux ou PLMNs distincts.

Essentiellement, suivant l'invention, la liste de cellules voisines est une liste optimisée, établie dans le réseau d'accès du réseau serveur de la station mobile, sur la base d'une liste de réseaux autorisés pour cette station mobile, reçue du réseau de coeur de ce réseau serveur.

Avantageusement, dans le cas de réseaux comportant différents types de cellules dans lesquelles sont disponibles différents services ou technologies d'accès radio, ladite liste de réseaux autorisés indique en outre, pour un réseau autorisé, les services ou technologies d'accès radio autorisés.

Les différentes technologies d'accès radio peuvent notamment inclure des technologies d'accès radio de deuxième génération et des technologies d'accès radio de troisième génération.

Notamment, les réseaux et/ou services ou technologies d'accès radio autorisés sont fonction des acccords d'itinérance entre opérateurs.

Les réseaux et/ou services ou technologies d'accès radio autorisés peuvent en outre être fonction du type d'abonnement de l'utilisateur.

Avantageusement, les réseaux autorisés sont classés suivant un ordre de préférence pour l'utilisateur.

Suivant un exemple, ledit réseau d'accès utilise des technologies d'accès radio de deuxième génération. Notamment, dans un système de type GSM, ledit réseau d'accès est du type BSS (« Base Station Sub-system»).

Suivant un autre exemple, ledit réseau d'accès utilise des technologies d'accès radio de troisième génération. Notamment, dans un système de type UMTS, ledit réseau d'accès est du type RNS (« Radio Network Sub-system»).

Suivant un exemple, ladite liste optimisée est transmise à la station mobile dans un canal commun.

Suivant un autre exemple, ladite liste optimisée est transmise à la station mobile dans un canal dédié.

Notamment, le réseau d'accès AN peut établir une liste optimisée de cellules voisines, à partir de la liste de cellules voisines avec laquelle il a été configuré (par des moyens tels que par exemple des moyens d'opération et de maintenance), et des informations relatives aux réseaux et/ou services ou technologies d'accès radio autorisés, ainsi reçues du réseau de coeur CN.

La liste optimisée de cellules voisines ainsi établie par le réseau d'accès est alors transmise par ce réseau d'accès à la station mobile. Si cette liste est particulière à chaque utilisateur, c'est-à-dire si elle a été établie en tenant compte également du type d'abonnement de l'utilisateur, elle est de préférence transmise dans un canal dédié. Si cette liste est commune aux utilisateurs, c'est-à-dire si elle n'a pas été établie en tenant également compte du type d'abonnement de l'utilisateur, elle peut être transmise dans un canal commun, la prise en compte du type d'abonnement pouvant alors se faire au niveau de la station mobile et/ou de la carte SIM associée.

Le réseau d'accès dans lequel est ainsi établie la liste optimisée de cellules voisines peut lui-même utiliser des technologies d'accès radio de deuxième génération, ou des technologies d'accès radio de troisième génération.

Un exemple de mise en oeuvre d'un procédé selon l'invention est maintenant décrit, correspondant plus particulièrement, à titre d'exemple, au cas de technologie d'accès radio de troisième génération, de type UMTS.

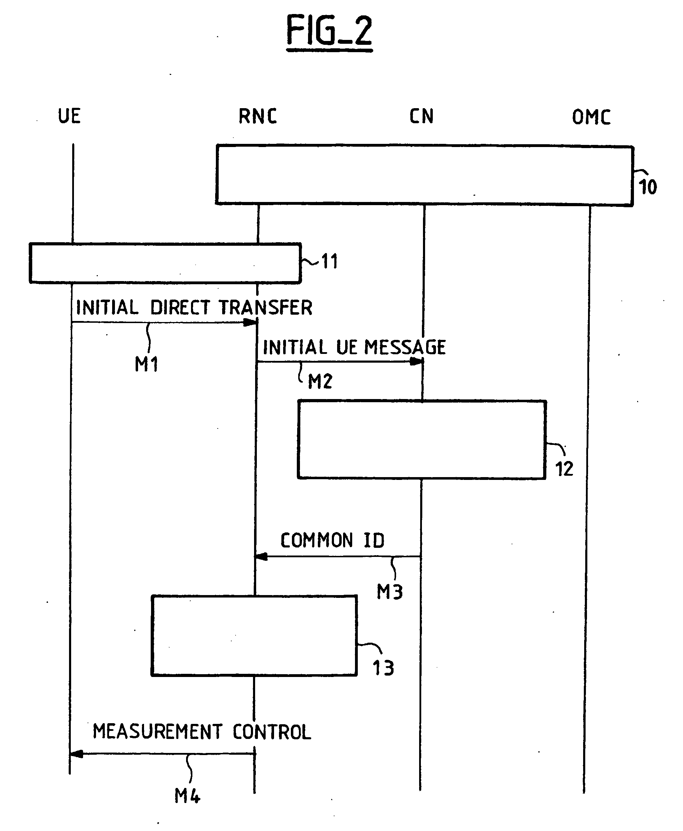

En référence à la figure 2, le procédé est décrit au moyen de diverses étapes faisant intervenir les entités UE (« User Equipment»), RNC (« Radio Network Controller », CN (« Core Network »), telles que rappelées dans l'introduction pour un système de type UMTS, et une entité OMC (« Operation & Maintenance Center » ) correspondant à des moyens d'opération et de maintenance, comme rappelé également dans l'introduction.

Le procédé illustré comporte une étape préalable notée 10 au cours de laquelle le RNC est configuré, pour chaque cellule qu'il contrôle, avec une liste de cellules voisines. Pour chaque cellule voisine, le réseau ou PLMN auquel elle appartient est indiqué, notamment au moyen de l'identité, ou « PLMN ID » de ce réseau, et le type de technolgie, ou RAT (pour « Radio Access Technolgy » en anglais) utilisé dans cette cellule est également indiqué.

Chaque RNC est ainsi configuré avec une liste de cellules voisines pour chaque cellule qu'il contrôle. En outre, dans le cas de connexion en macro-diversité faisant intervenir des RNC distincts, à savoir SRNC (pour « Serving RNC ») et CRNC (pour « Controlling RNC ») le RNC à considérer est le SRNC, et un CRNC peut aussi transmettre une liste de cellules voisines au SRNC via l'interface « lur ».

On rappelle que pour un Node B donné, le RNC qui le contrôle est aussi appelé CRNC (pour « Controlling Radio Network Controller » en anglais), et est donc relié à ce Node B via l'interface « lub ». Le CRNC a un rôle de contrôle de charge et de contrôle et d'allocation de ressources radio pour les Node B qu'il contrôle.

Pour une communication donnée relative à un équipement utilisateur UE donné, il existe un RNC, appelé SRNC (pour « Serving Radio Network Controller » en anglais) qui est connecté au coeur de réseau CN via l'interface « lu ». Le SRNC a un rôle de contrôle pour la communication considérée, incluant des fonctions d'ajout ou de retrait de liens radio (selon la technique de transmission en macro-diversité), de contrôle de paramètres susceptibles de changer en cours de communication, tels que débit, puissance, facteur d'étalement, ...etc.

Le procédé suivant l'invention peut être mis en oeuvre à l'établissement d'une connexion RRC avec un UE, ce qui a été représenté par une étape initiale notée 11. Suivant le protocole RRC (pour « Radio Resource Control » en anglais) tel que défini dans la norme 3G TS 25.331, les messages suivants sont transmis à l'établissement d'une telle connexion:
- un message appelé « Initial Direct transfer », noté M1, transmis de l'UE au RNC,
- un message appelé « Initial UE Message », noté M2, transmis du RNC au CN.

A la réception par le CN du message M2, une étape notée 12 est mise en oeuvre dans le CN, comportant notamment une interrogation de base de données d'abonnés mobiles, telle que notamment HLR (pour «Home Location Register » en anglais ) ou VLR (pour «Visited Location Register » en anglais), pour obtenir une liste de réseaux autorisés pour l'UE.

Un message M3 est alors transmis de CN vers RNC, contenant une liste de réseaux autorisés pour l'UE.

Avantageusement, les réseaux autorisés sont classés suivant un ordre de préférence pour l'UE.

Avantageusement, pour chaque réseau autorisé, le type de service et/ou technologie autorisé pour l'UE est indiqué (par exemple GSM, UMTS-FDD, UMTS-TDD, ...etc).

Le message M3 peut ainsi contenir par exemple les informations suivantes :
- identité de l'UE, notamment au moyen du numéro d'IMSI (pour « Mobile Subscriber Identity » en anglais),
- liste de réseaux ou PLMNs autorisés et préférés (avec, pour chacun, le type de technologie autorisé),
- liste de réseaux ou PLMNs autorisés (avec, pour chacun, le type de technologie autorisé).

Dans ces informations, les réseaux ou PLMNs autorisés peuvent également être identifiés par leur identité ou « PLMN ID ».

Avantageusement le message M3 peut être constitué par le message appelé « Common ID », utilisé selon le protocole de communication entre CN et RNC.

A la réception du message M3, le RNC établit (étape 13) une liste optimisée de cellules voisines. Dans l'exemple illustré, cette liste optimisée est établie à partir de la liste de cellules voisines avec laquelle il a été configuré, et à partir des informations contenues dans le message M3. Dans cet exemple, pour chaque réseau autorisé la technologie d'accès radio autorisée est indiquée. En outre, dans cet exemple, les réseaux autorisés sont classés suivant un odre de préférence pour l'utilisateur. La station mobile peut alors ne reporter des résultats de mesure que sur des cellules voisines appartenant à des réseaux préférés, ce qui permet d'optimiser encore les performances .

Le RNC peut aussi tenir compte d'autres critères pour établir la liste optimisée de cellules voisines, telles que notamment:
- des résultats de mesures reportés précédemment par l'UE,
- des paramètres RAB (« Radio Bearer »,
- des limitations de capacité de signalisation ou de capacités de l'UE,
- des contraintes sur l'utilisation du mode compressé,
- ....etc.

Dans le cas où le mode compressé doit être utilisé pour permettre des mesures radio sur une des cellules de la liste optimisée (en fonction de la technologie utilisée dans cette cellule), le RNC peut alors configurer en correspondance les paramètres de mode compressé.

La liste optimisée de cellules voisines peut être transmise à l'UE dans un message, noté M4, tel que notamment le message « Measurement Control » utilisé selon le protocole RRC.

On notera que la figure ainsi décrite ne représente que schématiquement un exemple de procédé, dans la mesure nécessaire à la compréhension de la présente invention, et sans plus entrer dans le détail des procédés ou protocoles de signalisation, qui peuvent par ailleurs faire appel à des principes classiques dans ces systèmes.

On notera en outre que cette figure ne correspond qu'à un exemple de réalisation, correspondant en l'occurrence au cas de technologies d'accès radio de type UMTS, et en outre à des exemples de messages de signalisation particuliers utilisés dans ce type de technolgoie d'accès radio, mais que d'autres exemples de messages de signalisation et/ou d'autres types de technologies d'accès radio seraient bien entendu possibles, sans sortir du cadre de la présente invention.

La présente invention a également pour objet, outre un tel procédé, un système de radiocommunications mobiles, ainsi qu'un réseau de radiocommunications mobiles, et une station mobile, comportant des moyens pour la mise en oeuvre d'un tel procédé.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour l'établissement d'une liste de cellules voisines pour une station mobile dans un système cellulaire de radiocommunications mobiles, ce procédé étant **caractérisé en ce que**, ledit système comportant une pluralité de réseaux distincts, ladite liste est une liste optimisée, établie dans le réseau d'accès du réseau serveur de cette station mobile, sur la base d'une liste de réseaux autorisés pour cette station mobile, reçue du réseau de coeur de ce réseau serveur.

2. Procédé selon la revendication 1, **caractérisé en ce que**, dans le cas de réseaux comportant différents types de cellules dans lesquelles sont disponibles différents services ou technologies d'accès radio, ladite liste de réseaux autorisés indique en outre, pour un réseau autorisé, les services ou technologies d'accès radio autorisés.

3. Procédé selon la revendication 2, **caractérisé en ce que** les différentes technologies d'accès radio incluent des technologies d'accès radio de deuxième génération et des technolgies d'accès radio de troisième génération.

4. Procédé selon l'une des revendications 1 à 3, **caractérisé en ce que** les réseaux et/ou services ou technologies d'accès radio autorisés sont fonction des acccords d'itinérance entre opérateurs.

5. Procédé selon l'une des revendications 1 à 4, **caractérisé en ce que** les réseaux et/ou services ou technologies d'accès radio autorisés sont en outre fonction du type d'abonnement de l'utilisateur.

6. Procédé selon l'une des revendications 1 à 5, **caractérisé en ce que** les réseaux autorisés sont classés suivant un ordre de préférence pour l'utilisateur.

7. Procédé selon l'une des revendications 1 à 6, **caractérisé en ce que** ledit réseau d'accès utilise des technologies d'accès radio de deuxième génération.

8. Procédé selon la revendication 7, **caractérisé en ce que**, dans un système de type GSM, ledit réseau d'accès est du type BSS (« Base Station Sub-system»).

9. Procédé selon l'une des revendications 1 à 7, **caractérisé en ce que** ledit réseau d'accès utilise des technologies de troisième génération.

10. Procédé selon la revendication 9, **caractérisé en ce que** dans un système de type UMTS, ledit réseau d'accès est du type RNS (« Radio Network Sub-system»).

11. Procédé selon l'une des revendications 1 à 10, **caractérisé en ce que** ladite liste optimisée est transmise à la stations mobile dans un canal commun.

12. Procédé selon l'une des revendications 1 à 10, **caractérisé en ce que** ladite liste optimisée est transmise à la station mobile dans un canal dédié.

13. Equipement de coeur de réseau (CN) pour réseau de radiocommunications, mobiles, comportant des moyens pour transmettre à un contrôleur de réseau radio (RNC), une liste de réseau autorisés pour une station mobile (UE), pour mettre en oeuvre un procédé selon l'une des revendications 1 à 12.

14. Equipement de coeur de réseau selon la revendication 13, comportant des moyens pour transmettre ladite liste dans un message « Common ID» utilisé selon le protocole de communication entre ledit équipement de coeur de réseau (CN) et ledit contrôleur de réseau radio (RNC).

15. Contrôleur de réseau radio (RNC) pour réseau de radiocommunications mobiles, comportant des moyens pour recevoir d'un équipement de coeur de réseau (CN) une liste de réseaux autorisés pour une station mobile (UE), et des moyens pour établir une liste de cellules voisines optimisée pour ladite station mobile, sur la base deladite liste de réseaux autorisés pour mettre en oeuvre un procédé selon l'une des revendications 1 à 12.

16. Contrôleur de réseau radio selon la revendication 15, comportant des moyens pour recevoir ladite liste dans un message « Common ID » selon le protocole de communication entre ledit équipement de coeur de réseau (CN) et ledit contrôleur de réseau radio (RNC).

17. Contrôleur de réseau radio selon la revendication 15 ou 16, comportant des moyens pour transmettre ladite liste optimisée à ladite station mobile dans un canal commun.

18. Contrôleur de réseau radio selon la revendication 15 ou 16, comportant des moyens pour transmettre ladite liste optimisée à ladite station mobile dans un canal dédié.

## Claims

1. Method for producing a list of neighbouring cells for a mobile station in a mobile radiocommunication cellular system, this method being **characterized in that**, said system comprising a plurality of different networks, said list is an optimized list, produced in the access network of the server network of this mobile station, based on a list of authorized networks for this mobile station, received from the core network of this server network.

2. Method according to claim 1, **characterized in that**, in the case of networks comprising different types of cells in which different radio access services or technologies are available, said list of authorized networks also indicates, for an authorized network, the authorized radio access services or technologies.

3. Method according to claim 2, **characterized in that** the different radio access technologies include second generation radio access technologies and third generation radio access technologies.

4. Method according to one of claims 1 to 3, **characterized in that** the authorized radio access technologies or services and/or networks depend on roaming agreements between operators.

5. Method according to one of claims 1 to 4, **characterized in that** the authorized radio access technologies or services and/or networks also depend on the user subscription type.

6. Method according to one of claims 1 to 5, **characterized in that** the authorized networks are classified according to an order of preference for the user.

7. Method according to one of claims 1 to 6, **characterized in that** said access network uses second generation radio access technologies,

8. Method according to claim 7, **characterized in that**, in a GSM type system, said access network is of the BSS ("Base Station Sub-system") type.

9. Method according to one of claims 1 to 7, **characterized in that** said access network uses third generation technologies.

10. Method according to claim 9, **characterized in that**, in a UMTS type system, said access network is of the RNS ("Radio Network Sub-system") type.

11. Method according to one of claims 1 to 10, **characterized in that** said optimized list is sent to the mobile station in a common channel.

12. Method according to one of claims 1 to 10, **characterized in that** said optimized list is sent to the mobile station in a dedicated channel.

13. Core network (CN) device for mobile radiocommunication network, comprising means for sending to a radio network controller (RNC) a list, of authorized networks for a mobile station (UE), to implement a method according to one of claims 1 to 12

14. Core network device according to claim 13, comprising means for sending said list in a "Common ID" message used according to the communication protocol between said core network (CN) device and said radio network controller (RNC).

15. Radio network controller (RNC) for mobile radiocommunication network, comprising means for receiving from a core network (CN) device a list of authorized networks for a mobile station (UE), and means for producing a list of neighbouring cells optimized for said mobile station, based on said list of authorized networks to implement a method according to one of claims 1 to 12.

16. Radio network controller according to claim 15, comprising means for receiving said list in a "Common ID" message used according to the communication protocol between said core network (CN) device and said radio network controller (RNC).

17. Radio network controller according to claim 15 or 16, comprising means for sending said optimized list to said mobile station in a common channel,

18. Radio network controller according to claim 15 or 16, comprising means for sending said optimized list to said mobile station in a dedicated channel.

## Patentansprüche

1. Verfahren zum Erstellen einer Liste von benachbarten Zellen für eine Mobilstation in einem Zellularsystem für die Mobilfunkkommunikation, wobei dieses Verfahren **dadurch gekennzeichnet ist, dass** das besagte System eine Vielzahl von verschiedenen Netzwerken umfasst, wobei die besagte Liste eine optimierte Liste ist, welche im Zugangsnetzwerk des Server-Netzwerks dieser Mobilstation auf der Basis einer vom Kernnetzwerk dieses Server-Netzwerks empfangenen Liste von für diese Mobilstation autorisierten Netzwerken erstellt wurde.

2. Verfahren nach Anspruch 1, **dadurch gekennzeichnet, dass** im Fall von Netzwerken mit unterschiedlichen Typen von Zellen, in welchen verschiedene Funkzugangsdienste oder -techniken verfügbar sind, die besagte Liste von autorisierten Netzwerken weiterhin für ein autorisiertes Netzwerk die autorisierten Funkzugangsdienste oder -techniken angibt.

3. Verfahren nach Anspruch 2, **dadurch gekennzeichnet, dass** die verschiedenen Funkzugangstechniken Funkzugangstechniken der zweiten Generation und Funkzugangstechniken der dritten Generation umfassen.

4. Verfahren nach einem der Ansprüche 1 bis 3, **dadurch gekennzeichnet, dass** die autorisierten Funkzugangsnetzwerke und/oder -dienste oder -techniken von den Roaming-Abkommen zwischen den Betreibern abhängig sind.

5. Verfahren nach einem der Anspruche 1 bis 4, **dadurch gekennzeichnet, dass** die autorisierten Funkzugangsnetzwerke und/oder -dienste oder -techniken weiterhin von der Art des Abonnements des Teilnehmers abhängig sind.

6. Verfahren nach einem der Ansprüche 1 bis 5, **dadurch gekennzeichnet, dass** die autorisierten Netzwerke gemäß einer Rangfolge der Präferenzen für den Teilnehmer geordnet sind.

7. Verfahren nach einem der Ansprüche 1 bis 8, **dadurch gekennzeichnet, dass** das besagte Zugangsnetzwerk Funkzugangstechniken der zweiten Generation verwendet.

8. Verfahren nach einem der Ansprüche 7, **dadurch gekennzeichnet, dass** in einem System vom Typ GSM das besagte Zugangsnetzwerk vom Typ BSS ("Base Station Sub-system") ist.

9. Verfahren nach einem der Anspruche 1 bis 7, **dadurch gekennzeichnet, dass** das besagte Zugangsnetzwerk Techniken der dritten Generation verwendet.

10. Verfahren nach Anspruch 9, **dadurch gekennzeichnet, dass** in einem System vom Typ UMTS das besagte Zugangsnetzwerk vom Typ RNS ("Radio Network Sub-system") ist.

11. Verfahren nach einem der Ansprüche 1 bis 10, **dadurch gekennzeichnet, dass** die besagte optimierte Liste in einem gemeinsamen Kanal an die Mobilstation übertragen wird,

12. Verfahren nach einem der Ansprüche 1 bis 10, **dadurch gekennzeichnet, dass** die besagte optimierte Liste in einem dedizierten Kanal an die Moblistation übertragen wird.

13. Kernnetzwerkausrüstung (CN) für ein Mobilfunkkommunlkationsnetz, mit Mitteln zum Übertragen einer Liste von für eine Mobilstation (UE) autorisierten Netzwerken an eine Funknetzwerk-Steuereinrichtung (RNC), um ein Verfahren gemäß einem der Ansprüche 1 bis 12 durchzuführen.

14. Kernnetzwerkausrüstung nach Anspruch 13, mit Mitteln zum Übertragen der besagten Liste in einer "Common ID"-Nachricht, welche gemäß dem Kommunikationsprotokoll zwischen der besagten Kernnetzwerkausrüstung (CN) und der besagten Funknetzwerk-Steuereinrichtung (RNC) verwendet wird.

15. Funknetzwerk-Steuereinrichtung (RNC) für ein Mobilfunkkommunikationsnetzwerk, mit Mitteln zum Empfangen einer Liste von für eine Mobilstation (UE) autorisierten Netzwerken von einer Kernnetzwerkatisrüstung (GN), und mit Mitteln zum Erstellen einer optimierten Liste von benachbarten Zellen für die besagte Mobilstation auf der Basis der besagten Liste von autorisierten Netzwerken, um ein Verfahren gemäß einem der Ansprüche 1 bis 12 durchzuführen.

16. Funknetzwerk-Steuereinrichtung nach Anspruch 15, mit Mitteln zum Empfangen der besagten Liste in einer "Common ID"-Nachricht, welche gemäß dem Kommunikationsprotokoll zwischen der besagten Kernnetzwerkausrüstung (CN) und der besagten Funknetzwerk-Steuereinrichtung (RNC) verwendet wird.

17. Funknetzwerk-Steuereinrichtung nach Anspruch 15 oder 16, mit Mitteln zum Übertragen der besagten optimierten Liste an die besagte Mobilstation in einem gemeinsamen Kanal.

18. Funknetzwerk-Steuereinrichtung nach Anspruch 15 oder 16, mit Mitteln zum Übertragen der besagten optimierten Liste an die besagte Mobilstation in einem dedizierten Kanal.
